# EUROPÄISCHE PATENTSCHRIFT

(11) **EP 2 755 853 B1**
(45) Veröffentlichungstag und Bekanntmachung des Hinweises auf die Patenterteilung: **30.11.2016**
(21) Anmeldenummer: 12740121.4
(22) Anmeldetag: 19.07.2012
(51) Int. Cl.: B60N 2/02, B60N 2/20, B60N 2/225, B60N 2/235

(54) **BESCHLAGSYSTEM FÜR EINEN FAHRZEUGSITZ**
FITTING SYSTEM FOR A VEHICLE SEAT
SYSTÈME DE FERRURE POUR UN SIÈGE DE VÉHICULE

(30) Priorität: 14.09.2011 DE 102011113747
(43) Veröffentlichungstag der Anmeldung: 23.07.2014
(73) Patentinhaber: Johnson Controls Components GmbH & Co. KG, 67657 Kaiserslautern (DE)
(72) Erfinder: JUNG, Thomas, 67753 Aschbach (DE); DUBOIS, Dirk, 66999 Hinterweidenthal (DE)
(74) Vertreter: Finger, Catrin
(86) Internationale Anmeldenummer: PCT/EP2012/064182
(87) Internationale Veröffentlichungsnummer: WO 2013/037550

(56) Entgegenhaltungen:
- DE-A1-102009 056 396
- DE-U1-202010 015 171
- US-A1- 2010 176 640

## Beschreibung

Die Erfindung betrifft ein Beschlagsystem für einen Fahrzeugsitz mit den Merkmalen des Oberbegriffs des Anspruches 1.

Ein Beschlagsystem dieser Art ist aus der DE 20 2010 15 171 U1 bekannt. Die Betätigung des ersten Bedienelements bewirkt eine Drehung der Übertragungsstange, welche wiederum beide Beschläge entriegelt. Mit diesem Beschlagsystem wird eine Lehne eines Fahrzeugsitzes relativ zu dessen Sitzteil geschwenkt, um eine andere Neigung einzustellen. Sofern zusätzlich ein Übergang in eine Nichtgebrauchsstellung gefordert wird, besteht je nach Zuordnung des zweiten Bedienelements zu den Beschlagteilen relativ zur Ausgangsstellung der Übertragungsstange das Problem, dass eines der Bedienelemente ungewollt durch die Schwenkbewegung betätigt wird.

Der Erfindung liegt die Aufgabe zu Grunde, ein Beschlagsystem der eingangs genannten Art zu verbessern. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

Das erfindungsgemäße Getriebemodul entkoppelt die Drehung der Beschlagteile, welche vorzugsweise mit einer Lehne und einem Sitzteil des Fahrzeugsitzes verbunden sind, von der Drehung der Übertragungsstange zur Entriegelung des Beschlags. Damit kann der Verriegelungszustand des Beschlags erhalten werden, auch wenn Bedienelement und Übertragungsstange Ausgangsstellungen mit räumlich unterschiedlicher Zuordnung zu den Beschlagteilen aufweisen. Dies ist insbesondere vorteilhaft bei Beschlagsystemen mit mehreren Bedienelementen, die aufgrund der Drehung der Beschlagteile den Verriegelungszustand beeinflussen könnten, oder bei Verwendung von Beschlägen mit mehreren Entriegelungsmöglichkeiten, beispielsweise für die Neigungseinstellung und zum Freischwenken.

Für die Entkopplungsfunktion weist das Getriebemodul vorzugsweise zwei geometrisch gleiche Planetengetriebe auf, welche mittels eines gemeinsamen Stegs kinematisch gekoppelt sind. Entsprechend sind vorzugsweise zwei Hohlräder, zwei Sonnenräder und mehrere Planetenräder vorgesehen. Die Hohlräder und Sonnenräder stehen mit den vier verschiedenen Bauteilen des Beschlagsystems in Wirkverbindung, d.h. den beiden Beschlagteilen, der Übertragungsstange und dem Bedienelement. Jede Winkeldifferenz zwischen den Hohlrädern führt zum Entriegeln bzw. Verriegeln des Beschlags, während eine gemeinsame Bewegung beider Hohlräder keine Auswirkung auf die Winkeldifferenz zwischen den Sonnenrädern und folglich auf den Verriegelungszustand des Beschlags hat, sondern diesen erhält.

Eine Kombination von zwei geometrisch gleichen Planetengetrieben ist beispielsweise aus der DE 10 2009 056 396 A1 bekannt. Diese sind jedoch ein integraler Bestandteil eines Antriebssystems und im Gehäuse des Antriebssystems gelagert. Das Antriebssystem weist eine elektromechanischen Ansteuerung mit einem elektrischen Motor, einer vom Motor angetriebene Antriebsscheibe und einer mit der Antriebsscheibe auf Mitnahme gekoppelte Steuerscheibe auf. Die Steuerscheibe wirkt auf eines der Hohlräder ein. Eine zusätzliche manuelle Notfallbetätigung ist möglich.

Das erfindungsgemäße Getriebemodul hingegen ist eine Baueinheit, also eine vormontierte Baugruppe aus verschiedenen zusammenwirkenden Bauteilen, welche vorzugsweise in sich geschlossen ist, d.h. insbesondere ein eigenes schützendes Gehäuse aufweist, und welche mit den anderen Bestandteilen des Beschlagsystems modular kombiniert werden kann, insbesondere auch nachträglich montiert werden kann. Erfindungsgemäß ist die Bildung des Gehäuses mittels zweier relativ zueinander drehbarer Hohlräder, die halbgeschlossen ausgebildet und mit den offenen Seiten einander zugewandt sind, wodurch das Gehäuse geschlitzt ist.

Für den axialen Zusammenhalt des Getriebemoduls, d.h. insbesondere seiner Bauteile, ist vorzugsweise eine Clipsverbindung vorsehen, die einfach zu schließen ist. Besonders bevorzugt ist, dass diese Clipsverbindung zugleich das Getriebemodul am Beschlag axial sichert. Außer der Vorpositionierung bei der Montage können damit auch zum Beschlag konzentrische Drehungen ermöglicht werden. Für die drehfeste Verbindung zu den Beschlagteilen und die Wirkverbindung mit dem Bedienelement sind vorzugsweise radial abstehende Arme vorgesehen, so dass der axiale Bauraum klein gehalten wird.

Das erfindungsgemäße Beschlagsystem wird in Fahrzeugsitzen bevorzugt zur Einstellung der Lehnenneigung eingesetzt, kann aber auch an anderen Stellen verwendet werden. Die Ausführung des Beschlags als scheibenförmige Einheit ermöglicht beliebige Winkeländerungen zwischen den Beschlagteilen durch die relative Verdrehung um die Achse. Der axiale Zusammenhalt der Beschlagteile wird durch einen Umklammerungsring erzeugt.

Im Folgenden ist die Erfindung anhand eines in der Zeichnung dargestellten Ausführungsbeispiels näher erläutert. Es zeigen
- Fig. 1: eine teilweise geschnitten dargestellte, perspektivische Ansicht des Getriebemoduls,
- Fig. 2: einen axialen Schnitt durch das Getriebemodul mit schematisiertem Beschlag,
- Fig. 3: eine Explosionsdarstellung des Getriebemoduls,
- Fig. 4: eine teilweise geschnittene Seitenansicht des Ausführungsbeispiels in der verriegelten Gebrauchsstellung,
- Fig. 5: eine Ansicht entsprechend Fig. 4 in der entriegelten Gebrauchsstellung,
- Fig. 6: eine Ansicht entsprechend Fig. 4 in der entriegelten Nichtgebrauchsstellung,
- Fig. 7: eine Ansicht entsprechend Fig. 4 in der verriegelten Nichtgebrauchsstellung,

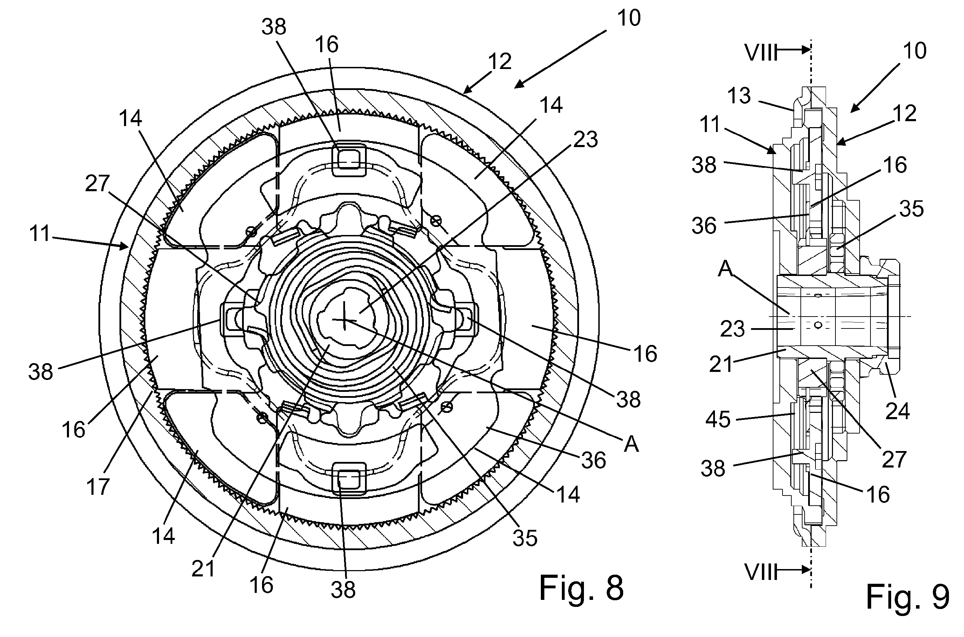

- Fig. 8: einen radialen Schnitt durch den Beschlag entlang der Linie VIII-VIII in Fig. 9,
- Fig.9: einen axialen Schnitt durch den Beschlag,

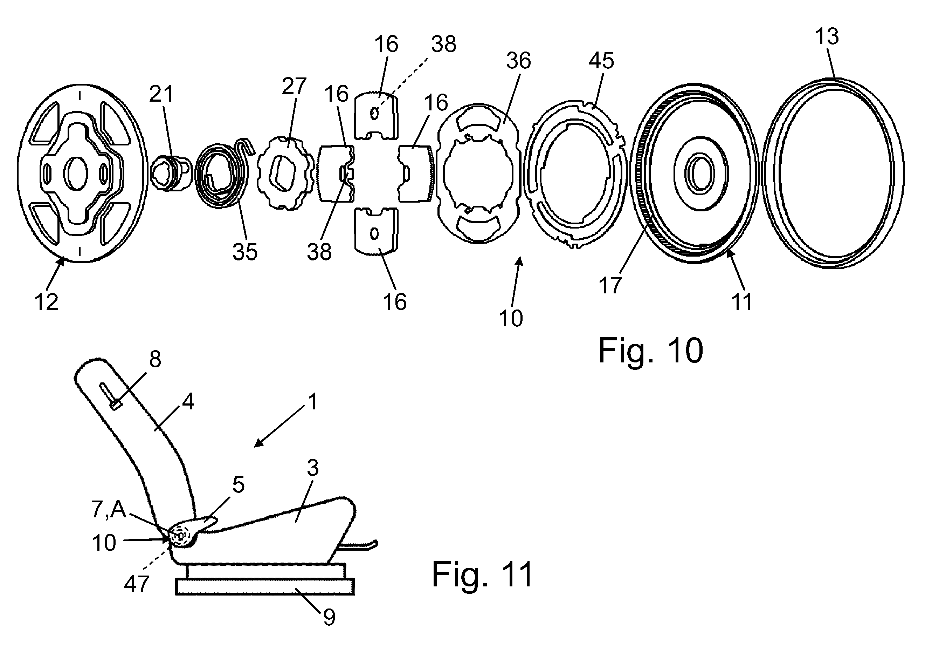

- Fig. 10: eine Explosionsdarstellung des Beschlags, und
- Fig. 11: eine schematische Darstellung eines Fahrzeugsitzes.

Ein Fahrzeugsitz 1 für ein Kraftfahrzeug weist ein Sitzteil 3 und eine Lehne 4 auf, welche relativ zum Sitzteil 3 schwenkbar und mit diesem verriegelbar ist. Die Lehne 4 ist neigungseinstellbar, d.h. zwischen verschiedenen Gebrauchsstellungen einstellbar. Außerdem ist die Lehne 4 aus einer Gebrauchsstellung nach vorne in eine Nichtgebrauchsstellung schwenkbar, beispielsweise eine freigeschwenkte Stellung (Einstiegsstellung) zur Erleichterung des Einstiegs in eine hintere Sitzreihe oder eine Tischstellung zur Vergrößerung des Laderaums. Die Neigungseinstellung der Lehne 4 und das (zentrische) Freischwenken erfolgen um eine gemeinsame Achse A, die ein nachfolgend verwendetes Zylinderkoordinatensystem definiert.

Die Neigungseinstellung der Lehne 4 erfolgt mittels manueller Betätigung eines ersten Bedienelements 5, beispielsweise eines Handhebels. Mit der Achse A fluchtend und um diese drehbar ist eine (starre, vorzugsweise hohle oder gegebenenfalls massive) Übertragungsstange 7 vorgesehen, welche horizontal im Übergangsbereich zwischen Sitzteil 3 und Lehne 4 angeordnet ist. Das erste Bedienelement 5 sitzt vorzugsweise drehfest auf der profilierten Übertragungsstange 7, um diese zu drehen. Eine Drehung der Übertragungsstange 7 um einen bestimmten Winkel, beispielsweise bis zu 30°, entriegelt die Lehne 4.

Der Übergang in die Nichtgebrauchsstellung der Lehne 4 erfolgt mittels manueller Betätigung eines zweiten Bedienelements 8, beispielsweise eines weiteren Hebels an der Seite der Lehne 4, welcher ebenfalls die Lehne 4 entriegelt. Vorzugsweise weist der Fahrzeugsitz 1 am Sitzteil 3 beidseitig je ein Paar von Sitzschienen 9 auf, mittels derer er als Ganzes längseinstellbar ist (d.h. in seiner Sitzlängsposition einstellbar ist). Sofern die Nichtgebrauchsstellung eine freigeschwenkte Stellung ist, werden beim Übergang in diese freigeschwenkte Stellung auch die Sitzschienen 9 entriegelt und der Fahrzeugsitz 1 als Ganzes nach vorne geschoben, so dass in der freigeschwenkten Stellung der Fahrzeugsitz 1 eine vordere Sitzlängsposition einnimmt, was den Einstieg zur hinteren Sitzreihe zusätzlich erleichtert. Die Lehne 4 ist optional in dieser freigeschwenkten Stellung verriegelbar, um durch Polsterpressung oder beim Zurückschieben des Fahrzeugsitzes 1 nicht vorzeitig zurückzuschwenken. Entsprechendes gilt für eine Tischstellung.

Alternativ oder zusätzlich zur manuellen Betätigung kann das zweite Bedienelement 8 als eine mechanisch, elektrisch, pneumatisch und/oder hydraulisch betriebene Fernentriegelung ausgebildet sein, welche beispielsweise aus einem Gepäckabteil des Fahrzeugs heraus betätigbar ist.

Auf beiden Seiten des Fahrzeugsitzes 1 greift die Übertragungsstange 7 mit drehfester Verbindung (oder mit einem definierten Leerweg auf Mitnahme gekoppelt) in einen Beschlag 10 ein.

Jeder Beschlag 10 weist ein erstes Beschlagteil 11 und ein zweites Beschlagteil 12 auf, welche relativ zueinander um die Achse A verdrehbar sind. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im Wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und vor Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 20 2009 016 989 U1 beschrieben ist, deren diesbezüglicher Offenbarungsgehalt ausdrücklich einbezogen wird.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlags 10.

Das erste Beschlagteil 11 kann im zweiten Beschlagteil 12 gelagert sein. Die Verhältnisse könnten aber genau umgekehrt sein, d.h. das zweite Beschlagteil 12 kann auf dem ersten Beschlagteil 11 gelagert sein. Grundsätzlich sind aber beide Anordnungen gleichwertig.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend dem ersten Beschlagteil 11, gelagert ist, genauer gesagt in einer zentralen Öffnung desselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmers 21 eingeführt ist. An wenigstens einem Ende des Mitnehmers 21 ist ein Befestigungsring 24 vorgesehen, welcher vorliegend aus Kunststoff besteht und vorzugsweise mittels Ultraschallschweißens am Mitnehmer 21 befestigt ist. Am Befestigungsring 24 kann das erste Bedienelement 5 drehfest festgeclipst werden.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Eine Federanordnung 35, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine derartige Federanordnung 35 ist beispielsweise in der bereits oben genannten DE 20 2009 016 989 U1 oder in der DE 10 2005 046 807 B3 beschrieben, deren diesbezüglicher Offenbarungsgehalt ausdrücklich einbezogen wird. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

Bei zweitürigen Kraftfahrzeugen soll mittels Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn das erste Bedienelement 5 - oder das zweite Bedienelement 8 - nicht während des gesamten Freischwenkens gehalten werden muss und die Beschläge trotzdem erst in der freigeschwenkten Stellung verriegeln. Im Beschlag 10 ist hierfür zwischen der Steuerscheibe 36 und dem ersten Beschlagteil 11 um die Achse A herum optional ein ringförmiges Freischwenk-Steuerelement 45 vorgesehen, wie es beispielsweise in der DE 10 2006 015 560 B3 beschrieben ist, deren diesbezüglicher Offenbarungsgehalt ausdrücklich einbezogen wird.

Die beiden Beschläge 10, die Übertragungsstange 7 und die beiden Bedienelemente 5 und 8 sind Teile eines Beschlagsystems, zu welchem in der Regel auch wenigstens eine Lehnenkompensationsfeder 47 gehört, vorzugsweise zwei Lehnenkompensationsfedern 47. Die vorgesehenen Lehnenkompensationsfedern 47 sind einerseits am Sitzteil 3 und andererseits an der Lehne 4 abgestützt und vorzugsweise als - die Achse A umrundende - Spiralfedern ausgebildet. Bevorzugt ist eine Anordnung an jeweils einem der beiden Beschläge 10, wobei eine der beiden Abstützungen an einer (vorzugsweise angeschweißten) Stützbuchse am zugeordneten Beschlag 10 erfolgen kann. Wenn ausgehend von einer Gebrauchsstellung die Beschläge 10 entriegelt sind, kompensiert die Lehnenkompensationsfeder 47 wenigstens teilweise das Gewicht der leicht nach hinten geneigten Lehne 4, d.h. sie unterstützt die Schwenkbewegung der Lehne 4 nach vorne, was den Bedienkomfort verbessert.

Zu dem erfindungsgemäßen Beschlagsystem gehört auch ein Getriebemodul 70, welches einerseits die Schwenkbewegung der Lehne 4 relativ zum Sitzteil 3 - also die Drehung der Beschlagteile 11 und 12 - und die Drehung der Übertragungsstange 7 voneinander entkoppelt (ausgleicht), und andererseits von den Bedienelementen 5 und 8 angesteuert wird, um auf die Beschläge 10 einzuwirken. Das Getriebemodul 70 ist als eine Baueinheit ausgebildet, welche vormontiert ist und dem vorhandenen Beschlagsystem nachträglich hinzugefügt werden kann. Das Getriebemodul 70 ist in sich geschlossen, d.h. es weist ein Gehäuse auf, welches die innen liegenden Bauteile schützt. Das Getriebemodul 70 ist vorliegend benachbart (d.h. in unmittelbarer räumlicher Nachbarschaft) zu einem der beiden Beschläge 10 angeordnet und zu besagtem Beschlag 10 axial versetzt, beispielsweise auf der dem ersten Bedienelement 5 gegenüberliegenden Fahrzeugsitzseite oder auf der vom ersten Bedienelement 5 abgewandten Seite des Beschlags 10. Das Getriebemodul 70 ist speziell für Lehnen 4 mit Nichtgebrauchsstellungen, insbesondere Einstiegsstellungen oder Tischstellungen, konzipiert, insbesondere wenn die Lehne 4 hierfür über einen Winkelbereich schwenkt, der größer als der Drehwinkel der Übertragungsstange 7 ist. Das Getriebemodul 70 kann aber auch für andere Lehnen 4 eingesetzt werden.

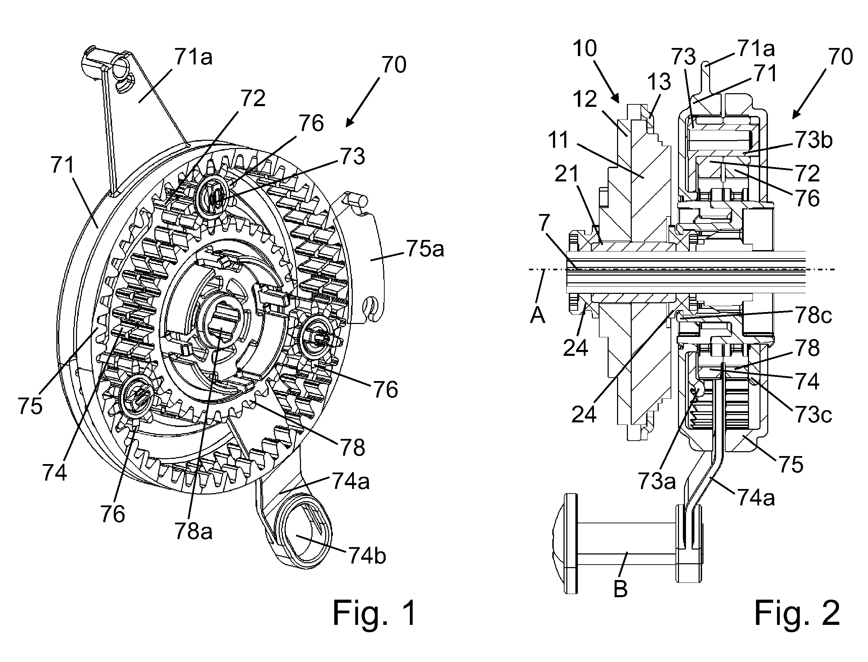

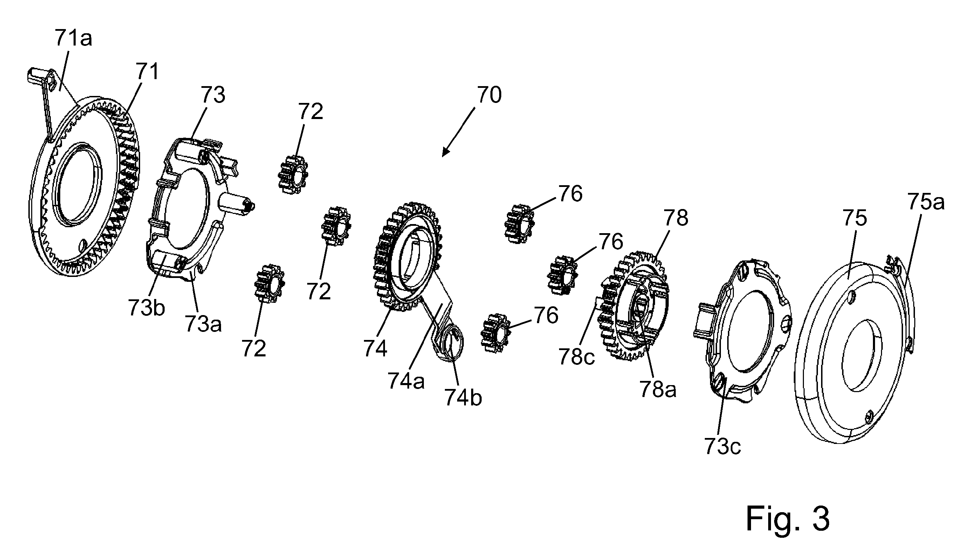

Der Aufbau des Getriebemoduls 70 ist in den Fig. 1 bis 3 näher dargestellt. Das Getriebemodul 70 dient als Differentialgetriebe und ist konzentrisch zur Achse A angeordnet. Das Getriebemodul 70 besteht aus zwei geometrisch gleichen (d.h. insbesondere bezüglich Durchmesser und Zähnezahl gleichen) Planetengetrieben, die in axial benachbarten Ebenen angeordnet sind. Das Getriebemodul 70 weist ein um die Achse A gekrümmtes erstes Hohlrad 71, welches vorzugsweise mit der Lehne 4 (also vorliegend mit dem ersten Beschlagteil 11) drehfest verbunden ist, wenigstens ein (vorzugsweise drei) mit der Innenverzahnung des ersten Hohlrades 71 kämmendes erstes Planetenrad 72, welches drehbar auf einem Steg 73 gelagert ist, und ein erstes Sonnenrad 74 auf, welches um die Achse A gekrümmt und vorzugsweise mit dem Sitzteil 3 (also vorliegend mit dem zweiten Beschlagteil 12) drehfest verbunden ist, genauer gesagt einem sitzteilfesten Unterteil des Beschlags 10. Das Getriebemodul 70 weist ferner ein zweites Hohlrad 75, welches mit dem zweiten Bedienelement 8 in Wirkverbindung steht, wenigstens ein (vorzugsweise drei) mit der Innenverzahnung des zweiten Hohlrades 75 kämmendes zweites Planetenrad 76, welches drehbar auf dem genannten Steg 73 gelagert ist (und unabhängig vom benachbarten ersten Planetenrad 72 drehbar ist), und ein zweites Sonnenrad 78 auf, welches um die Achse A gekrümmt und - für wenigstens eine Drehrichtung - drehfest mit der Übertragungsstange 7 verbunden (oder auf Mitnahme gekoppelt) ist. Der Steg 73 koppelt die beiden Planetengetriebe kinematisch. Die Hohlräder 71 und 75 und die Sonnenräder 74 und 78 können, soweit für die Anwendung des Getriebemoduls 70 kein voller Umfang benötigt wird, als Zahnradsegmente ausgebildet sein.

Der Steg 73 ist vorzugsweise mehrteilig ausgebildet und besteht im Ausfuhrungsbeispiel aus einem ringförmigen Achsträger 73a, am Achsträger 73a axial abstehenden Planetenachsen 73b, die jeweils eines der ersten Planetenräder 72 und eines der zweiten Planetenräder 76 lagern, und einer ringförmigen, zum Achsträger 73a parallel versetzten Achsstütze 73c.

Das erste Hohlrad 71 ist vorzugsweise halbgeschlossen ausgebildet, so dass es ein Bestandteil des Gehäuses des Getriebemoduls 70 bilden kann. Zur drehfesten Verbindung mit der Lehne 4 steht vom ersten Hohlrad 71 vorzugsweise ein erster Arm 71a radial nach außen ab. Der erste Arm 71a weist an seinem freien Ende einen Zapfen, welcher in eine Öffnung der Struktur der Lehne 4 greift, oder alternativ eine Öffnung auf, welche auf einen lehnenfesten Bolzen geschoben wird. Alternativ ist eine andere Befestigungsart vorgesehen, beispielsweise Schweißen, Nieten, Schrauben, Kleben.

Zur drehfesten Verbindung mit dem Sitzteil 3 steht vom ersten Sonnenrad 74 vorzugsweise ein zweiter Arm 74a ab, welcher - mittels einer Abköpfung - axial zwischen den beiden Hohlrädern 71 und 75 radial nach außen ragt. Der zweite Arm 74a weist an seinem freien Ende eine Öffnung 74b auf, welcher von einem sitzteilfesten Befestigungsmittel B, vorzugsweise einer Schraube, durchdrungen wird. Die Öffnung 74b ist vorzugsweise als Langloch ausgebildet, um Toleranzen ausgleichen zu können. Alternativ zur Öffnung 74b ist am freien Ende des zweiten Arms 74a ein Zapfen vorgesehen, welcher in eine Öffnung der Struktur des Sitzteils 3 greift. Weiter alternativ ist eine andere Befestigungsart vorgesehen, beispielsweise Schweißen, Nieten, Schrauben, Kleben.

Zur drehfesten Verbindung mit der Übertragungsstange 7 weist das zweite Sonnenrad 78 eine passend profilierte Stangenaufnahme 78a auf. Für eine axiale Sicherung des Getriebemoduls 70 an dem in unmittelbarer Nachbarschaft angeordneten Beschlag 10 wirkt das zweite Sonnenrad 78 mit einem der vorliegend zwei Befestigungsringe 24 am Mitnehmer 21 zusammen. Vorzugsweise weist das Sonnenrad 78 hierfür Clipshaken 78c auf, welche den Befestigungsring 24 hintergreifen unter Schaffung einer Clipsverbindung. Die Clipsverbindung sorgt auch für den axialen Zusammenhalt der Bauteile des Getriebemoduls 70.

Zur Wirkverbindung mit dem zweiten Bedienelement 8 ist ein Schaltseil 81 vorgesehen, vorzugsweise ein Bowdenzug, dessen Hülle an einem Halter 84 der Lehne 4 abgestützt ist. Der Halter 84 kann direkt an der Lehne 4 oder am ersten Arm 71 a oder am ersten Hohlrad 71 abgestützt, befestigt oder angeformt sein. Zur Einhängung des Schaltseils 81 am Getriebemodul 70 weist das zweite Hohlrad 75 einen Schaltarm 75a auf, beispielsweise ein radial abstehenden Nocken mit einer Aufnahme für einen Nippel des Schaltseils 81. Das Schaltseil 81 kann auch anderweitig mit dem zweiten Hohlrad 75 beziehungsweise dem Schaltarm 75a, verbunden sein. Auch das zweite Hohlrad 75 ist vorzugsweise halbgeschlossen ausgebildet, so dass es zusammen mit dem ersten Hohlrad 71 das (geschlitzte) Gehäuse des Getriebemoduls 70 bilden kann. Alternativ zum Schaltseil 81 kann auch eine Stange verwendet werden, die mit einem Leerweg (beispielsweise ein Langloch) an den Schaltarm 75a gekoppelt ist.

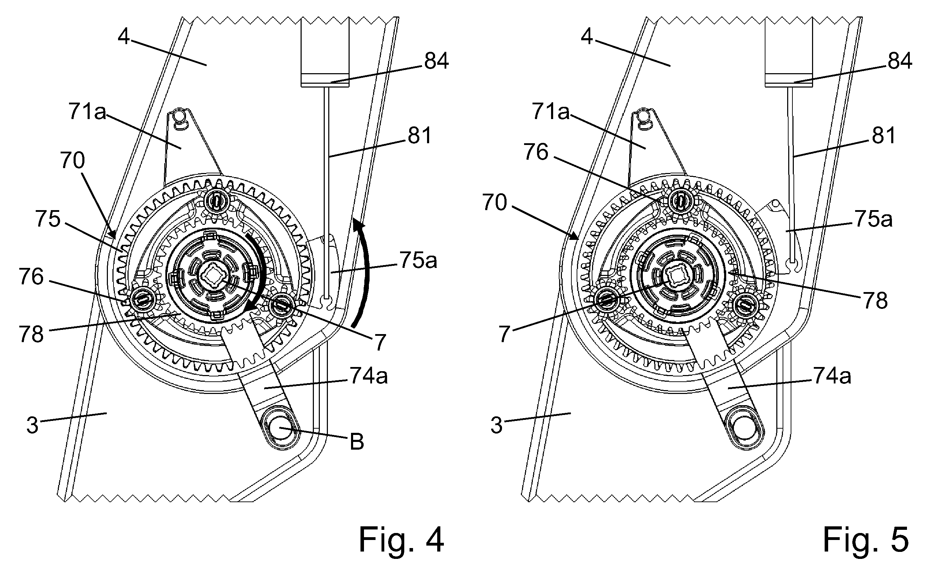

Die Funktionsweise des Getriebemoduls 70 ist in den Fig. 4 bis 7 näher dargestellt, wobei als Nichtgebrauchsstellung eine Tischstellung gewählt ist. In der verriegelten Gebrauchsstellung (Fig. 4) befinden sich alle Bauteile in ihrer Ausgangsstellung. Die verriegelten Beschläge 10 fixieren das lehnenfeste, mit dem ersten Beschlagteil 11 drehfest verbundene, erste Hohlrad 71 und das sitzteilfeste, mit dem zweiten Beschlagteil 12 drehfest verbundene, erste Sonnenrad 74 relativ zueinander und - aufgrund des gegenseitigen Getriebeeingriffs - auch die ersten Planetenräder 72 und den Steg 73. Die Bewegung der Bauteile des Getriebemoduls 70 lässt sich am besten anhand der Arme 71a, 74a und 75a und anhand des Abstandes zwischen dem Halter 84 und dem Schaltarm 75a erkennen.

Für den Übergang von der verriegelten Gebrauchsstellung (Fig. 4) in die entriegelte Gebrauchsstellung (Fig. 5) bestehen zwei gleichwirkende Möglichkeiten. Eine Betätigung des zweiten Bedienelements 8 (Übergang in Nichtgebrauchsstellung) bewirkt einen Zug am Schaltseil 81, welches wiederum den Schaltarm 75a beaufschlagt und dadurch das zweiten Hohlrad 75 um die Achse A dreht (in Fig. 4 gegen den Uhrzeigersinn). Da der Steg 73 ortsfest ist, treibt das zweite Hohlrad 75 die zweiten Planetenräder 76 zu einer gleichsinnigen (aber übersetzten) Drehung um die Planetenachsen 73b an, welche wiederum das zweite Sonnenrad 78 zu gegensinnigen (aber untersetzten) Drehung antreiben (in Fig. 4 im Uhrzeigersinn). Diese Drehung des zweiten Sonnenrades 78 bewirkt eine Drehung der Übertragungsstange 7 und dadurch ein Entriegeln der Beschläge 10, wodurch die entriegelte Gebrauchsstellung erreicht ist.

Alternativ bewirkt eine Betätigung des ersten Bedienelements 5 (Neigungseinstellung) ebenfalls eine Drehung der Übertragungsstange 7 (in Fig. 4 im Uhrzeigersinn) und dadurch ein Entriegeln der Beschläge 10. Da die Übertragungsstange 7 zugleich das zweite Sonnenrad 78 gleichsinnig dreht, führt dies zu einer gegensinnigen Drehung der ortsfesten zweiten Planetenräder 76 und des zweiten Hohlrades 75, so dass sich (bis auf eine Lose im Schaltseil 81) das gleiche Bild der entriegelten Gebrauchsstellung (Fig. 5) ergibt.

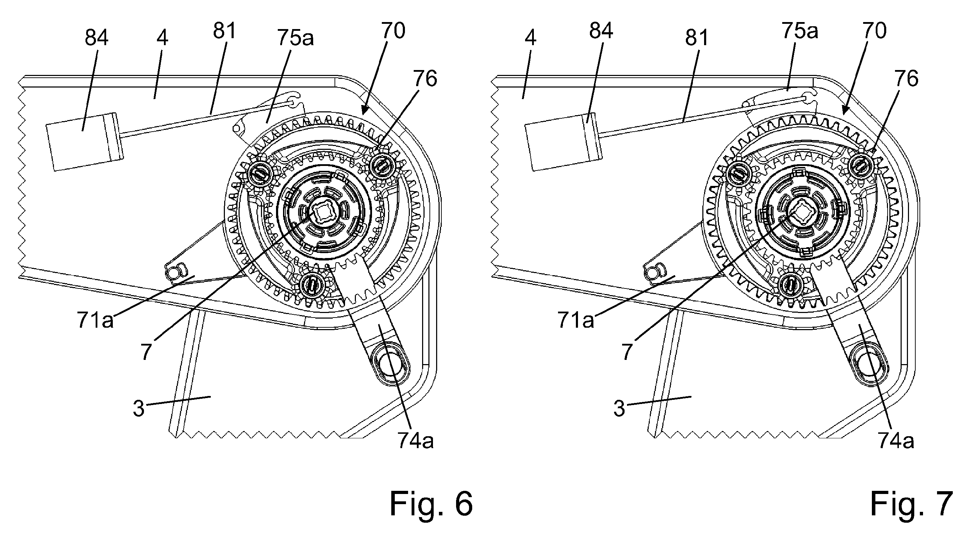

Für den Übergang von der entriegelten Gebrauchsstellung (Fig. 5) in die entriegelte Nichtgebrauchsstellung (Fig. 6) wird die Lehne 4 relativ zum Sitzteil 3 nach vorne geschwenkt. Dadurch dreht sich das lehnenfeste, mit dem ersten Beschlagteil 11 drehfest verbundene, erste Hohlrad 71 relativ zum sitzteilfesten, mit dem zweiten Beschlagteil 12 drehfest verbundenen, ersten Sonnenrad 74 (in Fig. 5 gegen den Uhrzeigersinn) um die Achse A. Da das erste Sonnenrad 74 ortsfest ist, zwingt das erste Hohlrad 71 die ersten Planetenräder 72 zu einer gleichsinnigen (aber übersetzten) Drehung um die Planetenachsen 73b und den Steg 73 zu einer gleichsinnigen (aber untersetzen) Drehung um die Achse A. Die Bewegung des Steges 73 zwingt auch die zweiten Planetenräder 76 zu einer Drehung um die Planetenachsen 73b. Solange das zweite Bedienelement 8 betätigt bleibt, dreht sich das zweite Hohlrad 75 synchron mit dem ersten Hohlrad 71 mit, so dass das zweite Sonnenrad 78 (und damit die Übertragungsstange 7) ungedreht bleibt, also die Beschläge 10 entriegelt bleiben.

Wenn das zweite Bedienelement 8 losgelassen würde, würde eine Rückstellfeder, beispielsweise die Federanordnung 35 oder eine zwischen Halter 84 und Schaltarm 75a wirkende Druckfeder, für ein (gegensinnige) Relativdrehung des zweiten Hohlrades 75 relativ zum ersten Hohlrad 71 führen, was dann mittels der zweiten Planetenräder 76 zu einer Drehung des zweiten Sonnenrades 78 (und der Übertragungsstange 7) in die zugeordnete Ausgangsstellung, also zu einem Verriegeln der Beschläge 10, führen würde. Um dies zu verhindern, ist das oben erwähnte Freischwenk-Steuerelement 45 vorgesehen. Letzteres kann dann die Drehungen von Übertragungsstange 7 und zweitem Sonnenrad 78 sowie die Relativdrehung des zweiten Hohlrades 75 verhindern. Die gleiche Funktionsweise ergibt sich, wenn das erste Bedienelement 5 betätigt wurde, also ein Übergang in eine andere Gebrauchsstellung erfolgt.

Wenn die entriegelte Nichtgebrauchsstellung (Fig. 6) erreicht ist, kann das zweite Bedienelement 8 losgelassen werden, oder das Freischwenk-Steuerelement 45 gibt die Drehung der Übertragungsstange 7 frei. Die ortsfeste Lehne 4 hält das erste Hohlrad 71 und damit die ersten Planetenräder 72 und den Steg 73 fest. Dadurch sorgt die besagte Rückstellfeder für eine gegensinnige Drehung von zweitem Hohlrad 75 und zweitem Sonnenrad 78 bei sich um die ortsfesten Planetenachsen 73b drehenden zweiten Planetenrädern 76. Die Drehung des zweiten Sonnenrades 78 zurück in seine Ausgangsstellung führt (mittels der Übertragungsstange 7) zum Verriegeln der Beschläge 10. Außerdem wird das Schaltseil 81 straff gezogen. Damit ist die verriegelte Nichtgebrauchsstellung (Fig. 7) erreicht. Die Rückkehr in die ursprüngliche Gebrauchsstellung erfolgt durch eine erneute Betätigung des zweiten Bedienelementes 8, umgekehrten Bewegungen der Bauteile des Getriebemoduls 70 und einem Zurückschwenken der Lehne 4.

Um eine Bewegung des ersten Bedienelements 5 bei einer Betätigung des zweiten Bedienelements 8 zu verhindern, kann die Mitnahme zwischen Übertragungsstange 7 und zweitem Sonnenrad 78 entsprechend der DE 10 2008 026 176 A1 oder der DE 10 2006 041 917 A1 auf eine Drehrichtung beschränkt werden. Der diesbezügliche Offenbarungsgehalt wird ausdrücklich einbezogen.

In einer abgewandelten Ausführung entfällt eines der Bedienelemente 5 oder 8. Die Einsatzmöglichkeit des Getriebemoduls 70 und dessen Funktionsweise bleibt jedoch erhalten. Die Zuordnung des ersten Hohlrades 71 und des ersten Sonnenrades 74 zu den Beschlagteilen 11 und 12 kann vertauscht sein.

### Bezugszeichenliste

- 1: Fahrzeugsitz
- 3: Sitzteil
- 4: Lehne
- 5: erstes Bedienelement
- 7: Übertragungsstange
- 8: zweites Bedienelement
- 9: Sitzschiene
- 10: Beschlag
- 11: erstes Beschlagteil
- 12: zweites Beschlagteil
- 13: Umklammerungsring
- 14: Führungssegment
- 16: Riegel
- 17: Zahnkranz
- 21: Mitnehmer
- 23: Bohrung
- 24: Befestigungsring
- 27: Exzenter
- 35: Federanordnung
- 36: Steuerscheibe
- 38: Nase
- 45: Freischwenk-Steuerelement
- 47: Lehnenkompensationsfeder
- 70: Getriebemodul
- 71: erstes Hohlrad
- 71a: erster Arm
- 72: erstes Planetenrad
- 73: Steg
- 73a: Achsträger
- 73b: Planetenachse
- 73c: Achsstütze
- 74: erstes Sonnenrad
- 74a: zweiter Arm
- 74b: Öffnung
- 75: zweites Hohlrad
- 75a: Schaltarm
- 76: zweites Planetenrad
- 78: zweites Sonnenrad
- 78a: Stangenaufnahme
- 78c: Clipshaken
- 81: Schaltseil
- 84: Halter
- A: Achse
- B: Befestigungsmittel

## Patentansprüche

1. Beschlagsystem für einen Fahrzeugsitz, insbesondere einen Kraftfahrzeugsitz, mit
a) wenigstens einem Beschlag (10), welcher ein erstes Beschlagteil (11) und ein zweites Beschlagteil (12) aufweist, die miteinander verriegelbar und relativ zueinander um eine Achse (A) verdrehbar sind,
b) einer Übertragungsstange (7), deren Drehung den Beschlag (10) entriegelt,
c) wenigstens einem Bedienelement (5, 8), dessen Betätigung die Drehung der Übertragungsstange (7) bewirkt,
d) einem Getriebemodul (70), welches als Differentialgetriebe ausgebildet und konzentrisch zur Achse (A) angeordnet ist, welches die Drehung der Beschlagteile (11, 12) und die Drehung der Übertragungsstange (7) voneinander entkoppelt, und dessen Komponenten vom manuell betätigten Bedienelement (5, 8) mechanisch angesteuert auf das erste Beschlagteil (11) oder das zweite Beschlagteil (12) des wenigstens einen Beschlags (10) einwirken, **dadurch gekennzeichnet, dass** das Getriebemodul (70) als eine vormontierte Baueinheit ausgebildet ist und zwei halbgeschlossene Hohlräder (71, 75) aufweist, welche mit ihren geöffneten Seiten einander zugewandt sind und zusammengesetzt ein Gehäuse des Getriebemoduls (70) bilden.

2. Beschlagsystem nach Anspruch 1, **dadurch gekennzeichnet, dass** das Getriebemodul (70) zwei geometrisch gleiche Planetengetriebe aufweist, die axial benachbart angeordnet sind und mittels eines gemeinsamen Stegs (73) kinematisch gekoppelt sind.

3. Beschlagsystem nach Anspruch 2, **dadurch gekennzeichnet, dass** das Getriebemodul (70) ein erstes Hohlrad (71), welches drehfest mit dem ersten Beschlagteil (11) verbunden ist, wenigstens ein erstes Planetenrad (72), welches mit dem ersten Hohlrad (71) kämmt, einen Steg (73), welcher das wenigstens eine erste Planetenrad (72) drehbar lagert, ein erstes Sonnenrad (74), welches mit dem wenigstens einen ersten Planetenrad (72) kämmt und welches drehfest mit dem zweiten Beschlagteil (12) verbunden ist, ein zweites Hohlrad (75), wenigstens ein zweites Planetenrad (76), welches mit dem zweiten Hohlrad (75) kämmt und welches der Steg (73) drehbar lagert, und ein zweites Sonnenrad (78), welches mit dem wenigstens einen zweiten Planetenrad (76) kämmt, aufweist, wobei das Bedienelement (5, 8) zur Ansteuerung des Getriebemoduls (70) mit dem zweiten Hohlrad (75) und/oder das zweite Sonnenrad (78) in mechanischer Wirkverbindung steht, und wobei das zweite Sonnenrad (78) mit der Übertragungsstange (7) drehfest verbunden oder auf Mitnahme gekoppelt ist, um auf den wenigstens einen Beschlag (10) einzuwirken.

4. Beschlagsystem nach einem der vorhergehenden Ansprüche, **dadurch gekennzeichnet, dass** das Bedienelement (5, 8) in mechanischer Wirkverbindung mit einem Schaltseil (81) steht, welches mit einem Bauteil des Getriebemoduls (70) verbunden ist, insbesondere mit einem an einem Hohlrad (75) vorgesehenen Schaltarm (75a).

5. Beschlagsystem nach einem der vorhergehenden Ansprüche, **dadurch gekennzeichnet, dass** das Getriebemodul (70) an dem wenigstens einen Beschlag (10) axial gesichert ist, insbesondere mittels einer Clipsverbindung zwischen einem Befestigungsring (24) des wenigstens einen Beschlags (10) und einem Sonnenrad (78) des Getriebemoduls (70).

6. Beschlagsystem nach einem der vorhergehenden Ansprüche, **dadurch gekennzeichnet, dass** Mittel zum axialen Zusammenhalt der Bauteile des Getriebemoduls (70) vorgesehen sind, insbesondere eine Clipsverbindung, die das Getriebemodul (70) am Beschlag (10) sichert.

7. Beschlagsystem nach einem der vorhergehenden Ansprüche, **dadurch gekennzeichnet, dass** das Getriebemodul (70) radial abstehende Arme (71a, 74a, 75a) zur Befestigung und/oder zur Ansteuerung mittels des Bedienelements (5, 8) aufweist.

8. Beschlagsystem nach einem der vorhergehenden Ansprüche, **dadurch gekennzeichnet, dass** am ersten Beschlagteil (11) ein Zahnkranz (17) ausgebildet ist, dass das zweite Beschlagteil (12) radial verschiebliche Riegel (16) führt, welche mit dem Zahnkranz (17) zusammenwirken, um den Beschlag (10) zu verriegeln, dass ein federbelasteter, mittels eines Mitnehmers (21) drehbarer Exzenter (27) die Riegel (16) beaufschlagt, und dass die Übertragungsstange (7) bei ihrer Drehung den Mitnehmer (21) dreht, welcher dadurch den Exzenter (27) dreht.

9. Fahrzeugsitz (1) mit einem Sitzteil (3) und einer Lehne (4), welche mittels eines Beschlagsystems (5, 7, 10, 47, 70) nach einem der vorhergehenden Ansprüche am Sitzteil (3) angebracht, relativ zu diesem schwenkbar und mit diesem verriegelbar ist.

## Claims

1. A fitting system for a vehicle seat, in particular a motor vehicle seat, comprising
a) at least one fitting (10) which comprises a first fitting part (11) and a second fitting part (12) which are able to be interlocked and rotated relative to one another about an axis (A),
b) a transmission bar (7), the rotation thereof unlocking the fitting (10),
c) at least one operating element (5, 8), the actuation thereof effecting the rotation of the transmission bar (7),
d) a gear module (70) which is configured as a differential gear and is arranged concentrically to the axis (A) which decouples the rotation of the fitting parts (11, 12) and the rotation of the transmission bar (7) from one another, and the components thereof mechanically activated by the manually actuated operating element (5, 8) act on the first fitting part (11) or the second fitting part (12) of the at least one fitting (10) **characterized in that** the gear module (70)is configured as a pre-mounted sub-assembly and has two half-closed ring gears (71, 75) which face one another with their open sides and assembled together form a housing of the gear module (70).

2. The fitting system as claimed in claim 1, **characterized in that** the gear module (70) has two planetary gear systems which are geometrically the same and which are arranged axially adjacent and are coupled together kinematically by means of a common planet carrier (73).

3. The fitting system as claimed in claim 2, **characterized in that** the gear module (70) has a first ring gear (71) which is connected fixedly in terms of rotation to the first fitting part (11), at least one first planet gear (72) which meshes with the first ring gear (71), a planet carrier (73) which rotatably mounts the at least one first planet gear (72), a first sun wheel (74) which meshes with the at least one first planet gear (72) and which is connected fixedly in terms of rotation to the second fitting part (12), a second ring gear (75), at least one second planet gear (76) which meshes with the second ring gear (75) and which the planet carrier (73) rotatably mounts, and a second sun wheel (78) which meshes with the at least one second planet gear (76), wherein the operating element (5, 8) cooperates mechanically with the second ring gear (75) and/or the second sun wheel (78) for activating the gear module (70), and wherein the second sun wheel (78) is connected fixedly in terms of rotation or is coupled for entrainment to the transmission bar (7) in order to act on the at least one fitting (10).

4. The fitting system as claimed in one of the preceding claims, **characterized in that** the operating element (5, 8) cooperates mechanically with a shift cable (81) which is connected to a component of the gear module (70), in particular to a shift arm (75a) provided on a ring gear (75).

5. The fitting system as claimed in one of the preceding claims, **characterized in that** the gear module (70) is axially secured on the at least one fitting (10), in particular by means of a clip connection between a fastening ring (24) of the at least one fitting (10) and a sun wheel (78) of the gear module (70).

6. The fitting system as claimed in one of the preceding claims, **characterized in that** means are provided for axially holding together the components of the gear module (70), in particular a clip connection which secures the gear module (70) to the fitting (10).

7. The fitting system as claimed in one of the preceding claims, **characterized in that** the gear module (70) has radially protruding arms (71a, 74a, 75a) for the fastening and/or for the activation by means of the operating element (5, 8).

8. The fitting system as claimed in one of the preceding claims, **characterized in that** a toothed wheel (17) is formed on the first fitting part (11), that the second fitting part (12) guides radially displaceable locking bars (16) which cooperate with the toothed wheel (17) in order to lock the fitting (10), that a spring-loaded eccentric (27) which is rotatable by means of a drive element (21) acts upon the locking bars (16) and that the transmission bar (7), when rotated, rotates the drive element (21) which as a result rotates the eccentric (27).

9. A vehicle seat (1) comprising a seat part (3) and a backrest (4) which is attached to the seat part (3), which is pivotable relative thereto and which is able to be locked thereto by means of a fitting system (5, 7, 10, 47, 70), as claimed in one of the preceding claims.

## Revendications

1. Système de ferrure pour un siège de véhicule, notamment un siège de véhicule automobile, comprenant
a) au moins une ferrure (10), laquelle possède une première partie de ferrure (11) et une deuxième partie de ferrure (12) qui peuvent être verrouillées l'une avec l'autre et qui peuvent tourner l'une par rapport à l'autre autour d'un axe (A),
b) une tige de transmission (7) dont la rotation déverrouille la ferrure (10),
c) au moins un élément de commande (5, 8) dont l'actionnement provoque la rotation de la tige de transmission (7),
d) un module à engrenage (70) qui est réalisé sous la forme d'un engrenage différentiel et qui est disposé de manière concentrique par rapport à l'axe (A), lequel découple la rotation des parties de ferrure (11, 12) et la rotation de la tige de transmission (7) l'une de l'autre, et dont les composants, commandés mécaniquement par l'élément de commande (5, 8) actionné manuellement, agissent sur la première partie de ferrure (11) ou la deuxième partie de ferrure (12) de l'au moins une ferrure (10), **caractérisé en ce que** le module à engrenage (70) est réalisé sous la forme d'un sous-ensemble prémonté et possède deux couronnes de train planétaire (71, 75) à moitié fermées dont les côtés ouverts se font mutuellement face et qui, assemblées, forment un boîtier du module à engrenage (70).

2. Système de ferrure selon la revendication 1, **caractérisé en ce que** le module à engrenage (70) possède deux engrenages planétaires géométriquement identiques qui sont disposés axialement l'un à côté de l'autre et qui sont couplés de manière cinématique au moyen d'une âme (73) commun.

3. Système de ferrure selon la revendication 2, **caractérisé en ce que** le module à engrenage (70) possède une première couronne de train planétaire (71), qui est reliée solidaire en rotation avec la première partie de ferrure (11), au moins une première roue planétaire (72) qui s'engrène avec la première couronne de train planétaire (71), une âme (73) qui supporte en rotation l'au moins une première roue planétaire (72), une première roue solaire (74) qui s'engrène avec l'au moins une première roue planétaire (72) et qui est reliée solidaire en rotation avec la deuxième partie de ferrure (12), une deuxième couronne de train planétaire (75), au moins une deuxième roue planétaire (76) qui s'engrène avec la deuxième couronne de train planétaire (75) et que l'élément jointif (73) supporte en rotation, et une deuxième roue solaire (78) qui s'engrène avec l'au moins une deuxième roue planétaire (76), l'élément de commande (5, 8) se trouvant en liaison fonctionnelle mécanique avec la deuxième couronne de train planétaire (75) et/ou la deuxième roue solaire (78) pour la commande du module à engrenage (70), et la deuxième roue solaire (78) étant reliée solidaire en rotation ou couplée en entraînement avec la tige de transmission (7) afin d'agir sur l'au moins une ferrure (10).

4. Système de ferrure selon l'une des revendications précédentes, **caractérisé en ce que** l'élément de commande (5, 8) se trouve en liaison fonctionnelle mécanique avec un câble de commande (81) qui est relié à un élément structural du module à engrenage (70), notamment à un bras de commande (75a) présent sur une couronne de train planétaire (75).

5. Système de ferrure selon l'une des revendications précédentes, **caractérisé en ce que** le module à engrenage (70) est bloqué axialement sur l'au moins une ferrure (10), notamment au moyen d'une liaison par agrafe entre une bague de fixation (24) de l'au moins une ferrure (10) et une roue solaire (78) du module à engrenage (70).

6. Système de ferrure selon l'une des revendications précédentes, **caractérisé en ce que** des moyens servant à la cohésion axiale des éléments structuraux du module à engrenage (70) sont prévus, notamment une liaison par agrafe qui bloque le module à engrenage (70) sur la ferrure (10).

7. Système de ferrure selon l'une des revendications précédentes, **caractérisé en ce que** le module à engrenage (70) possède des bras (71a, 74a, 75a) faisant saillie radialement servant à la fixation et/ou servant à la commande au moyen de l'élément de commande (5, 8).

8. Système de ferrure selon l'une des revendications précédentes, **caractérisé en ce qu'**une couronne dentée (17) est formée sur la première partie de ferrure (11), **en ce que** la deuxième partie de ferrure (12) guide des verrous (16) coulissant radialement qui coopèrent avec la couronne dentée (17) afin de verrouiller la ferrure (10), **en ce qu'**un excentrique (27) chargé par ressort et pouvant tourner au moyen d'un élément d'entraînement (21) sollicite les verrous (16), et **en ce que** la tige de transmission (7), lors de sa rotation, fait tourner l'élément d'entraînement (21) qui fait ainsi tourner l'excentrique (27).

9. Siège de véhicule (1) comprenant une partie d'assise (3) et un dossier (4) qui est monté sur la partie d'assise (3) au moyen d'un système de ferrure (5, 7, 10, 47, 70) selon l'une des revendications précédentes, qui peut pivoter par rapport à celle-ci et peut être verrouillé avec celle-ci.
